(19) **Europäisches Patentamt / European Patent Office / Office européen des brevets**

(11) **EP 4 444 443 B1**

(12) **FASCICULE DE BREVET EUROPEEN**

(45) Date de publication et mention de la délivrance du brevet:
**19.11.2025 Bulletin 2025/47**

(21) Numéro de dépôt: **22843851.1**

(22) Date de dépôt: **06.12.2022**

(51) Classification Internationale des Brevets (IPC):
**B01D 29/21** *(2006.01)*  **B01D 29/96** *(2006.01)*
**B01D 35/153** *(2006.01)*  **B01D 35/16** *(2006.01)*

(52) Classification Coopérative des Brevets (CPC):
**B01D 35/16; B01D 29/21; B01D 29/96;**
**B01D 35/153;** B01D 2201/0415; B01D 2201/316;
B01D 2201/4007

(86) Numéro de dépôt international:
**PCT/FR2022/052263**

(87) Numéro de publication internationale:
**WO 2023/105159 (15.06.2023 Gazette 2023/24)**

(54) **CARTOUCHE FILTRANTE À BOUCHON DÉCENTRÉ ET FILTRE POUR LIQUIDE DE MOTEUR À COMBUSTION INCLUANT LA CARTOUCHE**

FILTERPATRONE MIT DEZENTRALEM STOPFEN UND FILTER ZUM FILTERN EINER FLÜSSIGKEIT EINES VERBRENNUNGSMOTORS MIT DER KARTUSCHE

FILTER CARTRIDGE WITH OFF-CENTRE PLUG AND FILTER FOR FILTERING A LIQUID OF AN INTERNAL COMBUSION ENGINE INCLUDING THE CARTRIDGE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.12.2021 FR 2113170**

(43) Date de publication de la demande:
**16.10.2024 Bulletin 2024/42**

(73) Titulaire: **Purflux Filtration**
**78280 Guyancourt (FR)**

(72) Inventeurs:
• **BONNE, Samuel**
**14500 VIRE-NORMANDIE (FR)**
• **CANDY, Jérôme**
**61430 ATHIS-DE-L'ORNE (FR)**
• **ALCALAY, Clément**
**61800 TINCHEBRAY-BOCAGE (FR)**
• **KUFEL, Nicolas**
**14760 BRETTEVILLE-SUR-ODON (FR)**

(74) Mandataire: **Plasseraud IP**
**104 Rue de Richelieu**
**CS92104**
**75080 Paris Cedex 02 (FR)**

(56) Documents cités:
DE-A1- 102014 201 680  US-A1- 2017 043 285
US-A1- 2020 129 903

## Description

### Domaine technique

La présente divulgation concerne la purification de liquides et en particulier de l'huile utilisée dans les moteurs à combustion internes des véhicules motorisés. Il est plus particulièrement question, selon l'invention, d'un filtre pour la purification d'un liquide de moteur à combustion, en particulier de l'huile de lubrification, comprenant :

- un boîtier de filtre qui présente une entrée pour liquide brut et une sortie pour liquide purifié, le boîtier définissant un espace intérieur pour loger une cartouche filtrante et présentant un fond avec un canal d'évacuation distinct de l'entrée et de la sortie ;
- une cartouche filtrante adaptée pour être logée de façon amovible dans l'espace intérieur du boîtier.

L'invention se rapporte aussi à la cartouche filtrante, présentant une structure adaptée pour coopérer dans ce type de filtre, en permettant de boucher le canal d'évacuation qui est typiquement décentré.

### Arrière-plan technologique

Dans des véhicules motorisés, par exemple des automobiles, les opérations de maintenance du circuit de lubrification ou d'autres circuits de liquide peuvent être une source d'erreur. Le recours à des cartouches filtrantes permet de réutiliser un boîtier de filtre, ce qui réduit la partie remplacée et minimise l'impact environnemental. Pour le type de filtre susmentionné, l'utilisation d'un canal d'évacuation décentré peut permettre d'éviter de monter par erreur une cartouche non adaptée, qui n'est pas équivalente à celle disposée lors de la première monte dans le véhicule. Cependant, la mise en place de la cartouche peut nécessiter des difficultés, notamment pour s'assurer d'une position correcte de la cartouche et d'une obturation efficace du canal d'évacuation décentré qui est distincte d'une sortie de liquide filtré également située dans une partie de fond du filtre.

Dans ce type de filtre, la cartouche comporte typiquement :

- un média filtrant de forme annulaire qui s'étend autour d'un axe central ;
- un flasque comportant une portion radiale de forme annulaire et présentant une première face d'un premier côté où est disposé le média filtrant et une deuxième face d'un deuxième côté opposé au premier côté suivant la direction de l'axe central ; et
- un bouchon, de préférence parallèle à l'axe central, faisant saillie du deuxième côté par rapport au flasque de manière excentrique à une première distance de l'axe central, le bouchon présentant un élément ou une portion d'étanchéité pour obturer de manière étanche une ouverture du canal d'évacuation.

Ce type de filtre à canal d'évacuation (couramment appelé canal de vidange) décentré à proximité d'une paroi latérale du boîtier est par exemple connu du document EP 1 229 985 ou du document EP 2490786. Pour monter correctement la cartouche filtrante dans le boîtier, il est nécessaire d'atteindre la bonne position angulaire de la cartouche par rapport au fond du boîtier qui présente un tube saillant biseauté, en utilisant un guidage d'un ergot interne sur le bord supérieur annulaire du tube saillant, avant de finir d'enfoncer la cartouche vers le fond, typiquement par vissage du couvercle du boîtier.

La cartouche prévue dans le document EP 2490786 est considérée simple de conception et pourvue d'un petit ergot radial intérieur qui participe au guidage en rotation de la cartouche qui se décompose en un premier guidage contre une rampe rigide métallique formée comme le bord d'extrémité incliné d'un tube et un second guidage longitudinal, réalisé dans une fente de ce tube. Le guidage longitudinal coïncide avec l'enfoncement du bouchon dans le canal, ce qui évite des sollicitations mécaniques sur le bouchon lors du montage.

Un inconvénient de cette réalisation est que l'ergot, typiquement réalisé en plastique, peut être fragilisé par le premier contact contre le bord métallique. En cas de rupture, l'avantage du guidage disparaît et la cartouche peut être mal positionnée. Il en résulte aussi qu'un déchet plastique peut être présent du côté propre de la filtration. La robustesse de ce type de montage peut dépendre du choix d'un matériau particulier, par exemple renforcé en fibres mais alors il n'est pas possible ou en tout cas extrêmement difficile de recycler un tel matériau composite.

Il existe donc un besoin pour une solution alternative et fiable d'assemblage d'une cartouche filtrante à bouchon décentré dans un boîtier correspondant et qui permet, avec un minimum de manipulations pour l'utilisateur, d'obturer de façon sûre le canal d'évacuation.

### Résumé

A cet effet, il est proposé une cartouche filtrante pour la filtration d'un liquide de moteur à combustion (par exemple un lubrifiant ou un carburant), dans un filtre disposant d'un canal d'évacuation décentré sur un côté par rapport à un port d'accès (appartenant/correspondant, dans une base du filtre, à une entrée pour liquide brut ou à une sortie pour liquide purifié), la cartouche comprenant un média filtrant de forme annulaire permettant la purification dudit liquide en s'étendant autour d'un axe central, un espace interne creux délimité par le média filtrant débouchant axialement grâce à/via une orifice axial de la cartouche, la cartouche comprenant :

- un flasque comportant l'orifice axial et une portion radiale de forme annulaire autour de cet orifice (le média pouvant être supporté par la portion radiale en étant axialement fixé à

- une ossature intérieure, fixe dans l'espace interne creux et pourvue d'un guide longitudinal, l'ossature intérieure pouvant éventuellement être solidaire, par exemple clipsée au flasque ;
- un élément tel qu'un coulisseau, de préférence de forme tubulaire, qui s'étend longitudinalement dans l'espace interne creux en étant engagé sur le guide longitudinal avec un effet anti-rotation, l'élément présentant une extrémité de contact axialement en regard de l'orifice axial et adaptée pour le contact avec un tube saillant (pour l'écoulement de liquide) prévu dans le port d'accès, l'extrémité de contact s'étendant de façon asymétrique autour de l'axe central/longitudinal pour présenter une inclinaison avec une première portion de bord qui s'étend comparativement plus près du flasque qu'une deuxième portion de bord ;
- au moins une surface d'arrêt pour retenir axialement l'élément, en l'empêchant de quitter l'espace interne creux au travers de l'orifice axial ;
- un moyen de précontrainte; et
- un bouchon, de préférence parallèle à l'axe central, faisant saillie à l'opposé du média, depuis le flasque, pour permettre d'obturer de manière étanche une ouverture du canal d'évacuation ;
  et dans laquelle l'élément est agencé mobile dans l'espace interne creux pour se déplacer, linéairement le long du guide, suivant la direction de l'axe central :
- d'une première position, avec l'élément en butée contre ou axialement proximal par rapport à l'au moins une surface d'arrêt prévue sur le guide,
- à une deuxième position comparativement plus éloignée du flasque, dans laquelle l'élément est désengagé ou axialement distal de l'au moins une surface d'arrêt, l'élément d'indexation angulaire étant apte à s'éloigner du flasque en surmontant une force de rappel du moyen de précontrainte sollicitant ledit élément.

Grâce à cette disposition avec un élément (de type coulisseau) mobile à l'intérieur de la cartouche qui est asymétrique, il est permis d'engager un tube saillant inclus dans une partie de support de la cartouche avec un enfoncement de la cartouche, relativement au support/-boîtier, qui dépend de l'orientation angulaire de la cartouche. Ceci permet d'avoir le bouchon décentré bien positionné, en regard du canal, avant d'enfoncer davantage la cartouche, tandis que l'espace interne peut communiquer fluidiquement, éventuellement avec une étanchéité annulaire réalisée par la cartouche avec le port formant l'entrée ou la sortie du filtre. Par exemple, la cartouche peut être tournée et enfoncée sur le tube saillant jusqu'à obtenir une orientation qui :

- ne permet plus un glissement additionnel du tube saillant sur un bord de l'extrémité de contact en direction de la deuxième portion de bord ; et
- constitue l'unique position angulaire pour laquelle le bouchon est exactement en face du canal d'évacuation à obturer.

Une complémentarité de forme peut être utilisée pour faciliter ce glissement jusqu'à une prise d'engagement direct tube saillant - extrémité de contact. On comprend que l'élément est un élément d'indexation angulaire intégré à la cartouche. Cet élément forme une partie de prise sur le tube saillant, prévu dans le fond du boîtier

Typiquement, la première position est compatible avec un engagement direct entre l'extrémité de contact et le tube saillant, réalisé dans l'espace interne creux. La deuxième position, qui conserve cet engagement direct, peut être obtenue lors du montage d'un couvercle du filtre et/ou en enfonçant davantage la cartouche dans son support, ce qui revient à insérer plus loin le tube saillant dans l'espace interne creux de la cartouche. L'absence d'obtention de la première position va empêcher l'installation de la cartouche dans la mesure où le bouchon sera typiquement bloqué par une surface de fond du bol et incapable de s'enfoncer plus loin. A contrario, l'obtention de la première position rend l'enfoncement du bouchon sécurisé en passant de la première à la deuxième position, sans que l'élément d'indexation, qui est mobile pour pouvoir reculer tout en étant de conception robuste/rigide pour le contact avec le tube saillant, s'oppose au déplacement/rapprochement axial relatif de la cartouche par rapport à son support.

La disposition asymétrique (pas de symétrie de révolution autour de l'axe central) de l'extrémité de contact et la position décalée (également asymétrique) du bouchon se complètent avantageusement pour permettre une indexation en rotation de la cartouche dès que l'extrémité de contact s'engage avec complémentarité de forme (par exemple complémentarité d'un profil incliné/en pente) entre l'extrémité de contact et un bord complémentaire du tube saillant (qui est typiquement biseauté ou ayant un profil en pente complémentaire du bord, préférentiellement annulaire, formé à l'extrémité de contact).

La mobilité de l'élément d'indexation peut être autorisée seulement au-delà d'un seuil de force/poussée axiale, du fait de l'action d'un moyen de contrainte/précontrainte, par exemple poussant l'élément d'indexation en butée contre la ou les surface d'arrêt. Avec la cartouche adaptée au support, on comprend que l'élément d'indexation peut facilement éviter un blocage dans une mauvaise position angulaire (en autorisant un glissement avec rotation induite), et le montage s'avère ainsi intuitif tout en bénéficiant d'un effet de détrompage. A l'inverse, dans des formes de réalisation préférées, s'il ne s'agit pas d'une cartouche correcte, l'absence d'indexation va empêcher le montage. Par ailleurs, si la cartouche susmentionnée est utilisée avec un autre type de support, par exemple du type à cylindre classique pour former la sortie, alors l'insertion de ce type classique de tube ne se fera pas aussi loin qu'avec le tube saillant du support correct, et la fermeture du couvercle ne sera pas permise.

Selon une particularité, l'extrémité de contact est configurée pour former un moyen anti-rotation permettant d'empêcher une rotation relative entre la cartouche et la base du filtre, sachant que le tube saillant présente aussi une inclinaison, formant un bord libre de profil sensiblement complémentaire de celui de l'extrémité de contact. Bien entendu, l'effet anti-rotation est alors utilisé pour l'insertion du bouchon (aucune rotation relative entre la cartouche et le support incluant le tube saillant), tandis que l'obtention préalable de l'engagement extrémité de contact - tube saillant va typiquement impliquer une rotation de la cartouche (sauf si cartouche est bien disposée du premier coup).

Dans une forme de réalisation, l'inclinaison dans l'extrémité de contact s'étend sur une hauteur H1, dite hauteur de pente, qui vérifie la relation suivante par rapport à une hauteur H2 du bouchon définie depuis le flasque :

$$0,88 \leq H2/H1 \leq 1,01$$

(bien entendu ces hauteurs sont mesurées suivant la direction de l'axe central/longitudinal, typiquement de façon perpendiculaire au flasque).

Une configuration de prise entre l'extrémité de contact et le tube tube saillant peut être obtenue, avec l'effet anti-rotation, avant que l'élément d'indexation recule, donc avant que le bouchon pénètre dans le canal d'évacuation pour l'obturer. Le dimensionnement susmentionné peut permettre d'optimiser la hauteur du tube saillant et la course requise pour la mise en place de la cartouche.

L'élément pour la prise sur le tube saillant est tubulaire avec l'extrémité (6c) de contact permettant un engagement contact bout à bout (avec le tube saillant) sous la forme d'une zone d'interface (entre deux tubes) inclinée. Du liquide peut circuler entre les creux respectifs des tubes mis bout à bout.

L'agencement de l'ossature/structure intérieure, avec un élément d'indexation angulaire, permet de fournir une cartouche compacte et pourvue d'un système détrompeur permettant par indexation de la cartouche en rotation de positionner correctement le bouchon de purge face au canal de purge et ayant en outre un rôle de reprise de couple lors du montage de la cartouche (le bouchon n'a pas besoin de s'appuyer axialement sur le fond lors de la rotation). Lorsque la cartouche est en position enfoncée avec l'élément d'indexation (formant un détrompeur interne) est reculé/rétracté, le bouchon pénètre dans le canal d'évacuation.

Dans des options préférées, lors d'un vissage/dévissage du couvercle sur lequel est fixée la cartouche, c'est le tube saillant qui vient en appui contre la forme complémentaire (avec profil incliné) dans l'extrémité de contact de l'élément d'indexation, pour la transmission du couple. Le bouchon n'est donc soumis à aucun effort, ce qui empêche typiquement la déformation des éléments d'étanchéité et prévient la casse du bouchon.

Dans une forme de réalisation, l'élément d'indexation angulaire inclut une partie rigide pourvue d'une face extérieure latérale avec deux reliefs de guidage formés sur la face extérieure latérale et engagés avec deux reliefs allongés longitudinalement qui appartiennent au guide longitudinal, l'extrémité de contact étant formée dans la partie rigide. On comprend que le guide est une structure de guidage pouvant être distribuée dans plusieurs régions de l'ossature, en incluant par exemple des rails parallèles à l'axe central.

Selon une particularité, l'extrémité de contact peut se décomposer en deux moitiés, de préférence symétriques l'une de l'autre par rapport un plan passant par l'axe central qui est un plan de symétrie du média filtrant. Typiquement, la première portion de bord et la deuxième portion de bord sont distribués chacune dans les deux moitiés, la deuxième portion de bord étant une portion de l'extrémité de contact distale par rapport au flasque.

L'ossature intérieure peut inclure une pièce (monobloc) pourvu du guide et d'un organe entretoise, par exemple sous la forme d'un croisillon, apte former une butée axiale pour un organe de rappel élastique comprimé entre la butée axiale et l'élément d'indexation angulaire qui est lui-même engagée axialement en butée contre la ou les surfaces d'arrêt.

Les caractéristiques exposées dans les paragraphes suivants peuvent, optionnellement, être mises en œuvre, indépendamment les unes des autres ou en combinaison les unes avec les autres :

- les surfaces d'arrêt comprennent deux surfaces ou nervures réparties sur les deux reliefs longitudinaux, qui sont des reliefs radialement saillants vers l'intérieur par rapport au reste de l'ossature intérieure afin de s'engager dans des rainures correspondantes/complémentaires prévues sur la face extérieure latérale de la partie rigide de l'élément d'indexation angulaire.
- il est prévu au moins deux surfaces d'arrêt, décalées de part et d'autre de la première portion de bord.
- les surfaces d'arrêt sont formées comme des projections radiales internes sur des rails qui s'insèrent dans des rainures longitudinales de la partie rigide, tubulaire, de l'élément d'indexation en rotation.
- une portion de la face extérieure latérale, délimitée par la première portion de bord, se situe plus près du flasque que la deuxième portion de bord.
- l'ossature intérieure, de préférence rigide, est de forme tubulaire et ajourée.
- l'ossature intérieure permet de supporter le média par la face intérieure de ce dernier.
- l'ossature intérieure s'étend, longitudinalement dudit flasque à un autre flasque appartenant à la cartouche et sur lequel le média filtrant est fixé (le média s'étendant longitudinalement entre ces deux flasques).

- le média permet de délimiter une zone d'amont de liquide brut du côté de sa face latérale extérieure et une zone d'avale pour liquide propre du côté de sa face latérale intérieure.

- le bouchon présente un élément ou une portion d'étanchéité pour obturer de manière étanche une ouverture du canal d'évacuation.

- la partie rigide de l'élément d'indexation angulaire est solidaire en translation, suivant l'axe central, d'une extrémité mobile d'un organe de rappel élastique, de préférence sous la forme d'un organe axialement compressible.

- la cartouche filtrante est adaptée évacuer le liquide purifié dans l'espace interne creux délimité par le média, via l'orifice axial (sélectivement via cet orifice) qui constitue une sortie (typiquement une unique sortie) de la cartouche.

- un élément d'étanchéité, par exemple sous la forme d'une lèvre appartenant à une pièce formant le flasque ou sous la forme d'un joint annulaire rapporté, est disposé au niveau de l'orifice axial.

- l'élément d'étanchéité permet de séparer de façon étanche la zone d'amont (en amont du média) qui correspond typiquement à un espace périphérique et la zone d'aval qui inclut l'espace interne creux, dans un état assemblé de la cartouche avec le tube saillant ayant une portion de surface externe de ce tube en contact étanche annulaire (radial) avec l'élément d'étanchéité.

- l'espace interne creux délimité par le média filtrant est un espace de circulation pour liquide filtré par le média filtrant, l'orifice axial étant un orifice de sortie de la cartouche, ayant de préférence une délimitation circulaire.

- une partie annulaire d'étanchéité élastiquement déformable est prévue sur une partie d'insertion annulaire du flasque, afin de délimiter un minimum local pour la section de passage au travers du flasque et permettre de réaliser un contact annulaire radial d'étanchéité annulaire contre une portion annulaire du tube saillant (sur sa surface externe) inséré dans l'espace interne creux via l'orifice axial.

- il est prévu, dans l'espace interne creux, un élément compressible élastiquement déformable apte à solliciter par défaut, de préférence par une poussée longitudinale, l'élément d'indexation angulaire contre l'au moins une surface d'arrêt, de sorte que l'élément d'indexation se trouve par défaut dans une position basse/proximale par rapport au flasque, qui correspond à ladite première position.

Indépendamment de l'utilisation ou non d'un organe de rappel élastique disposé dans l'espace interne creux, on comprend que l'élément d'indexation angulaire forme un coulisseau, monté mobile pour pouvoir être poussé par un système à précontrainte (ou tout système de contrainte), par exemple un ressort. Au-delà d'un seuil de force pour repousser l'élément en surmontant la force de rappel ou précontrainte, l'élément d'indexation peut reculer dans l'espace interne (donc remonter à l'opposé du flasque pourvu du bouchon).

Dans des exemples de réalisation, la géométrie avec bord incliné de l'extrémité de contact ne permet cependant d'atteindre/dépasser un tel seuil qu'à condition pour le tube saillant de ne plus glisser le long du bord formant une rampe/surface inclinée. Un opérateur qui monte la cartouche dans un bol pourvu du tube saillant va pouvoir ainsi ajuster la position angulaire de la cartouche parce que, en cas de mauvaise orientation initiale, l'extrémité de contact ne peut pas transférer de poussée et ne peut ainsi pas reculer. Cet ajustement peut être naturel pour l'opérateur, sachant que la rotation est induite par le glissement : une action de poussée avec une orientation angulaire décalée significativement (par exemple plus de 60° de différence) va être accompagnée d'une rotation guidée vers la bonne orientation.

Dans des options, l'élément d'indexation angulaire est apte à s'éloigner du flasque en surmontant une force de rappel d'un moyen de précontrainte sollicitant l'élément d'indexation angulaire. Structurellement, l'extrémité de contact peut former l'extrémité d'une pièce tubulaire axiale avec une inclinaison progressive au moins dans deux régions en pente adjacentes à la première portion de bord et réparties de part et d'autre de la première portion de bord.

Le fait de combiner une fonction de coulissement sans possibilité de rotation, une fonction de guidage qui décale le sommet du tube saillant sur un côté cible, via l'inclinaison de l'élément d'indexation angulaire, et un rappel vers la position basse de cet élément permet de proposer une cartouche robuste et compacte. Un déplacement/recul significatif de l'élément d'indexation angulaire (surmontant la précontrainte exercée par le moyen de précontrainte) peut être empêché tant qu'il n'y a pas une prise efficace sur le bord de l'extrémité tubulaire de contact, notamment lorsqu'il y a encore une possibilité de glissement le long des régions en pente.

Une structure tubulaire de l'élément d'indexation, en particulier avec une structure ouverte aux deux extrémités de l'élément d'indexation angulaire, est avantageusement compatible avec une circulation de liquide entre la face interne du média filtrant traversée par ce liquide et l'orifice axial, sans générer de perte de charge puisque du liquide en circulation axiale peut aussi bien contourner l'élément d'indexation que le traverser axialement.

Le moyen de précontrainte peut présenter une première extrémité fixe dans la cartouche, en s'étendant longitudinalement dans l'espace interne creux entre une entretoise de l'ossature intérieure contre laquelle s'appuie la première extrémité et un organe transversal porté par l'élément d'indexation angulaire.

Optionnellement, l'organe transversal s'étend transversalement, par exemple perpendiculairement à l'axe central, dans la pièce tubulaire axiale. Cet organe transversal est engagé par une deuxième extrémité mobile du moyen de précontrainte, de sorte que l'organe transversal est apte à pousser la deuxième extrémité mobile en direction de la première extrémité. Ceci peut correspondre à une compression d'un ressort. Cela peut aussi correspondre à la compression d'un substrat élastiquement compressible/déformable interposé entre la première extrémité et la deuxième extrémité du moyen de précontrainte ou encore au rapprochement/contraction d'un agencement à deux organes magnétiques exerçant entre eux une force axiale de répulsion.

Le moyen de précontrainte peut être réalisé d'une seule pièce, sous la forme d'un élément de rappel élastique, par exemple un ressort hélicoïdal incluant la première extrémité et la deuxième extrémité. Dans une option de réalisation, l'élément d'indexation angulaire et le moyen de rappel élastique sont formés d'une seule pièce, moulée en matériau plastique, par exemple par injection.

Selon une particularité, l'extrémité de contact est une extrémité de tube biseautée, de préférence avec un angle d'inclinaison compris entre 20 et 70°. Une coupe droite pour réaliser l'inclinaison peut permettre de faciliter le glissement du tube saillant, biseauté de façon complémentaire, vers la position de chevauchement maximum.

Selon un autre aspect, il est proposé un filtre pour la purification d'un liquide de moteur à combustion, le filtre comprenant :

- un boîtier de filtre qui présente une entrée pour liquide brut et une sortie pour liquide purifié, le boîtier définissant un volume intérieur et présentant un fond avec un canal d'évacuation distinct de l'entrée et de la sortie ;
- un couvercle pour empêcher l'accès au volume intérieur et se fixant de manière amovible sur un bol du boîtier entourant le volume intérieur ;
- un tube saillant prévu dans un port d'accès à la sortie, le tube saillant étant une partie fixe solidaire du bol ;
- la cartouche filtrante telle que précédemment décrite, logée de façon amovible dans le volume intérieur du boîtier avec le tube saillant inséré dans l'espace interne creux en engageant l'extrémité de contact de l'élément d'indexation en rotation, suivant un engagement permettant d'indexer la cartouche filtrante en rotation autour de l'axe central par rapport au boîtier.

Le tube saillant est traversé par l'axe central et s'oppose à un mouvement de rotation relative, autour de l'axe central, entre la cartouche et le bol, dans une configuration de prise dans laquelle le tube saillant et l'extrémité de contact sont en chevauchement par complémentarité de forme. Le filtre est ainsi pourvu d'une cartouche avec un contact entre deux parties robustes pour l'indexation en rotation, l'engagement étant effectué par complémentarité entre des régions de contact en pente.

On comprend que, lors de la mise en place de la cartouche, l'extrémité de contact forme une région de préfixation. Considérant que le bol du boîtier est fixe, par exemple en étant déjà monté dans un véhicule (immobile dans un garage), la conception coulissante de l'élément d'indexation annulaire permet de continuer à déplacer la cartouche pour l'engagement du bouchon sans modifier la position de la partie rigide de l'élément d'indexation incluant l'extrémité de contact. Ainsi, la fin du montage (de la préfixation à la fixation en position finale de montage) correspond à une mobilité purement axiale/ selon la direction de l'axe central de l'ensemble de la cartouche filtrante à l'exception de l'élément d'indexation déjà en prise sur le tube saillant.

La configuration de prise peut être avantageusement obtenue avant que le bouchon pénètre dans le canal d'évacuation pour l'obturer. De cette façon, le bouchon peut être maintenu à distance du fond du bol où est formée l'ouverture du canal d'évacuation, tant que la bonne position angulaire n'est pas obtenue, donc tant que le tube saillant n'a pas glissé complètement sur les portions de bord en pente de l'extrémité de contact pour occuper la configuration de prise ne permettant plus de mouvement relatif entre l'extrémité de contact et le bord correspondant du tube saillant.

Selon une particularité, le bol forme un fond du boîtier et présente un support de montage, le flasque coopérant avec ledit support pour positionner coaxialement la cartouche filtrante sur un conduit (conduit évidemment rigide) du support formant le port d'accès, le tube saillant étant disposé à une extrémité du conduit. Le couvercle peut optionnellement être adapté pour être vissé sur le bol en présentant un organe de fixation pour se mettre en prise avec la cartouche filtrante. L'organe de fixation comprend par exemple une portion d'insertion dans l'espace interne autorisant une rotation relative du couvercle par rapport à la cartouche filtrante lors d'un vissage du couvercle (avec une fixation couvercle - cartouche). A titre d'exemple non limitatif, un tel organe de fixation présente une portion d'entraînement autorisant une rotation relative entre le couvercle et la cartouche filtrante lors d'un vissage du couvercle sur lequel est fixé la cartouche filtrante. Cette rotation relative peut seulement avoir lieu après avoir obtenu la configuration de prise entre l'extrémité de contact et le tube saillant qui immobilise l'élément d'indexation angulaire ; le couvercle continue son mouvement de vissage et ce mouvement est converti en une poussée par l'organe de fixation et/ou par des surfaces de contact axiales couvercle - cartouche.

Selon une autre particularité, l'espace interne communique de manière étanche avec l'une parmi l'entrée et la sortie par le passage/orifice axial à travers le flasque lorsque ce dernier coopère avec le support du bol, le média filtrant s'étendant entre le flasque et un autre flasque annulaire traversé par l'organe de fixation du couvercle lorsque la cartouche filtrante est fixée au couvercle.

Selon une particularité de la cartouche, la première portion de bord se situe sur un premier côté et la deuxième portion de bord s'étend à l'opposé (diamétralement à l'opposé) du premier côté (sur un deuxième côté). Le bouchon est typiquement prévu sur un côté déterminé, de préférence différent du premier côté, par rapport à l'ouverture centrale.

**Brève description des dessins**

D'autres caractéristiques, détails et avantages apparaîtront à la lecture de la description détaillée ci-après, et à l'analyse des dessins annexés, sur lesquels :

la figure 1 montre, par une vue en perspective, un exemple de cartouche filtrante pourvue d'un bouchon décentré et d'un élément de guidage ayant un degré de mobilité dans le creux de la cartouche.

la figure 2 est une vue en coupe longitudinale, parallèlement à un axe central traversant une sortie pour liquide filtré, d'un filtre dans une position finale de montage de la cartouche associée, avec un organe élastiquement déformable dans un état comprimé dans le creux de la cartouche.

la figure 3 montre, suivant la même vue que sur la figure 2, une disposition éclatée de composants du filtre, avec la cartouche dans une position angulaire compatible avec la fermeture du canal décentré, avec l'organe élastiquement déformable dans une conformation par défaut.

la figure 4 illustre, avec une coupe longitudinale de la cartouche de la figure 1, un exemple d'intégration d'un élément de guidage, ici pourvu d'un organe élastiquement déformable et d'un embout creux permettant le contact de guidage en rotation lors de la mise en place de la cartouche dans le boîtier.

La figure 5 montre une partie rigide, appartenant à la cartouche, pour le maintien de l'élément de guidage dans l'espace intérieur creux délimité par le média filtrant de la cartouche.

la figure 6 est une vue de dessus du fond d'un support prédéterminé utilisé pour le montage de la cartouche filtrante.

**Description des modes de réalisation**

Il est exposé ci-après, de façon détaillée, plusieurs exemples de modes de réalisation non limitatifs. Sur les différentes figures, des références identiques indiquent des éléments identiques ou similaires.

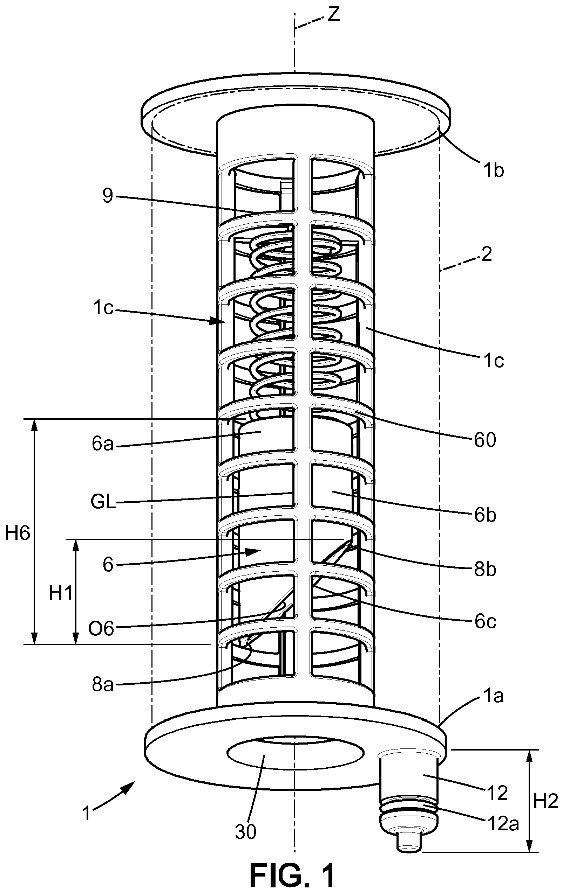

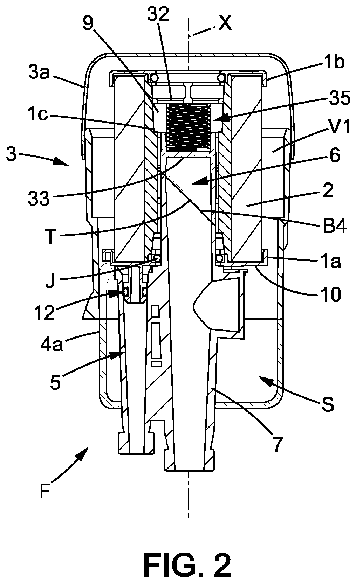

En référence aux figures 1 et 2, le filtre F à liquide comporte un support S réutilisable et un élément filtrant jetable appelé cartouche filtrante 1. Comme visible sur la figure 1, la cartouche filtrante 1 comporte un flasque inférieur 1a, un flasque supérieur 1b, un élément ou structure intérieure 1c de forme sensiblement tubulaire et un média filtrant 2 disposé autour de la structure intérieure 1c et à travers lequel peut passer le liquide à filtrer, par exemple de l'huile de lubrification ou éventuellement un carburant. De façon connue en soi, le média filtrant 2 est interposé entre le flasque inférieur 1a et le flasque supérieur 1b et permet de filtrer les impuretés contenues dans le liquide. Le média filtrant 2 présente ici une forme annulaire en s'étendant autour d'un axe central Z qui définit une direction longitudinale de la cartouche 1.

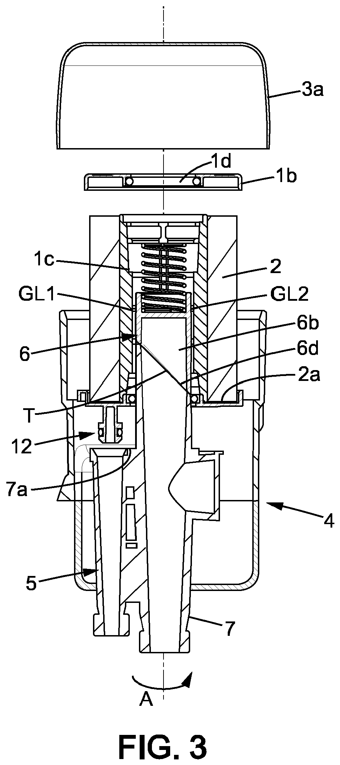

La cartouche filtrante 1 peut être logée de façon amovible dans l'espace intérieur d'un boîtier 3 du filtre F qui forme le support S réutilisable. Le boîtier 3 présente une entrée pour liquide brut (non représentée) et une sortie O pour liquide purifié. Le boîtier 3 est généralement conçu en deux parties avec un bol 4 visible sur la figure 2 et un couvercle 3a pouvant se visser sur le bol 4, un verrouillage additionnel ou alternatif pouvant être utilisé dans des variantes. Le couvercle 3a est de préférence réutilisable même si la fonction de couvercle amovible pourrait éventuellement être intégrée à la cartouche 1. Le couvercle 3a peut être similaire à celui montré à la figure 1 du document EP 2 490 786, avec des moyens de fixation, avec ou sans crochets d'encliquetage, pour venir en prise avec des projections internes ou des portions de contact formées sur la structure 1c, ici dans une extrémité annulaire supérieure de cette structure 1c, de la cartouche filtrante 1. Plus généralement, le couvercle 3a présente tout organe de fixation adapté, de préférence avec une portion d'entraînement en rotation et/ou en poussée axiale de la cartouche filtrante 1 lors du vissage du couvercle 3a (sur lequel est fixée la cartouche 1). Typiquement, le flasque annulaire 1b présente une ouverture 1d et peut ainsi être traversé par une partie d'insertion d'un tel organe de centrage et fixation lorsque la cartouche 1 est fixée au couvercle 3a. Également, des pattes intérieures de contact axial (non visibles sur les coupes des figures 2 et 3) peuvent permettre au couvercle 3a d'appuyer axialement sur le flasque 1b pour pousser la cartouche 1.

Le bol 4 est ici pourvu d'un conduit 7 longitudinal qui définit l'entrée ou la sortie du boîtier 3 de filtre. Une paroi latérale 4a du bol 4 entoure, avec un espacement radial, ce conduit 7 qui est agencé pour pouvoir s'insérer dans un espace interne creux 9 de la cartouche 1, ici délimité par le média filtrant 2.

On peut voir sur les figures 2 et 3, dans la configuration montée de la cartouche 1, que le conduit 7 fait saillie de façon à pénétrer dans l'espace interne 9, tandis que la paroi latérale 4a s'étend autour d'une face externe du média 2 annulaire. Ce média filtrant 2 sépare l'espace interne 9 pour liquide purifié (zone en aval en communication avec la sortie O) du volume périphérique V1 (zone en amont) dans lequel circule le liquide brut à purifier. La communication étanche de l'espace 9 avec la sortie O est réalisée à travers un orifice axial 30 central du flasque 1a, appelée dans ce qui suit orifice axial de sortie de la cartouche 1.

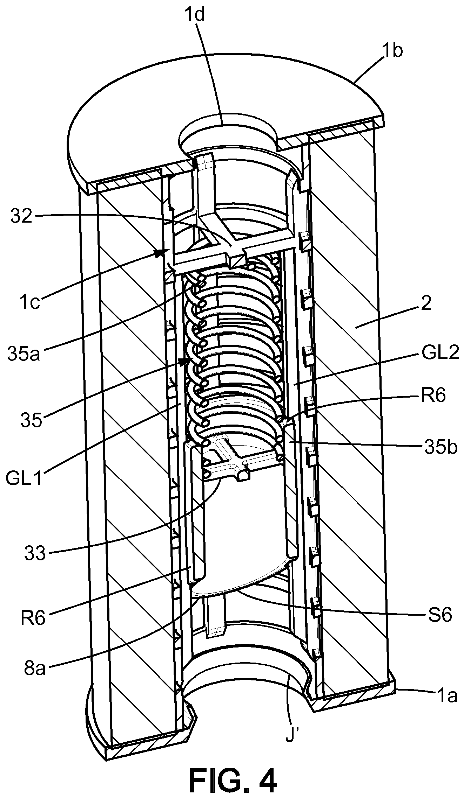

En référence aux figures 2 à 4, le bol 4 définit un fond du boîtier 3, sur lequel peut venir s'appuyer le flasque inférieur 1a de la cartouche 1. Le fond présente un canal d'évacuation 5 situé à proximité d'une portion de la paroi latérale 4a du bol 4 : il est décentré. La cartouche filtrante 1 peut comporter un joint torique J (visible sur les figures 2 et 3), par exemple placé au niveau de la jonction entre la structure intérieure 1c et le flasque inférieur 1a et destiné à assurer l'étanchéité avec le conduit 7 longitudinal qui définit l'entrée ou la sortie du boîtier de filtre. En variante et comme illustrés sur la figure 4 par exemple, une lèvre d'étanchéité J' peut être prévue directement sur le flasque inférieur 1a.

Dans un mode de réalisation préféré, le conduit 7 s'étend autour d'un axe central X qui coïncide avec l'axe central Z du média filtrant 2 de la cartouche 1 lorsque la cartouche 1 est montée sur le support S. Ce montage coaxial de la cartouche 1 est permis ici par la coopération du flasque 1a avec le support S, décrite ci-après. Le conduit 7 définit par exemple la sortie O pour le liquide purifié. On comprend que le canal d'évacuation 5 (pour permettre une purge au moment du retrait de la cartouche) est décentré par rapport à l'axe central X du conduit 7 définissant la sortie O.

La cartouche 1 se fixe ici de façon amovible sur le support S, par exemple à l'aide du couvercle 3a de liaison avec le bol 4. Alternativement, la fixation peut également être réalisée par des organes de fixation situés en dehors du couvercle 3a. Le support S peut faire partie intégrante du bol 4 qui est de préférence attaché sur un véhicule via des organes de fixation appropriés. La paroi latérale 4a du bol 4 peut être métallique et la structure du support S peut être réalisée en matière plastique et intégrer les deux canaux ou conduits (5, 7).

Le flasque 1a et l'ossature interne 1c de la cartouche filtrante 1 vont à présent être décrits plus en détail en liaison avec la figure 1.

Le flasque 1a comporte une portion radiale 10 de forme annulaire avec une première face d'un premier côté où est disposé le média filtrant 2 et une deuxième face d'un deuxième côté opposé au premier côté suivant la direction de l'axe central Z. La portion radiale 10 est par exemple sensiblement plane et s'étend de façon annulaire autour de l'ouverture centrale 11. Dans le mode de réalisation non limitatif de la figure 1, le flasque 1a présente une projection (éventuellement unique projection) sur sa deuxième face, de préférence parallèle à l'axe central Z, formant le bouchon 12 qui fait saillie sur ce deuxième côté par rapport au flasque 1a de manière excentrique. Le bouchon 12 présente ici un élément ou une portion d'étanchéité 12a pour obturer de manière étanche une ouverture 5a du canal d'évacuation 5.

La portion radiale 10 peut s'étendre d'un bord intérieur entourant l'orifice 30 à un bord extérieur annulaire, éventuellement en rejoignant : du côté du bord intérieur, une projection annulaire s'insérant dans l'espace interne creux 9 et pouvant porter un élément d'étanchéité J,J' ; et du côté du bord extérieur, un rebord axial formant une portion périphérique, par exemple cylindrique, qui s'étend autour de l'extrémité axiale 2a du média filtrant 2. Plus généralement, on peut prévoir tout rebord adapté qui prolonge axialement la portion radiale 10 sur l'un et/ou l'autre de ses bords de délimitation.

En référence à la figure 1, le bouchon 12 a par exemple une certaine hauteur H2 qui peut dépasser 9 ou 10 mm. Ce bouchon décentré peut obturer une ouverture de vidange qui, lors du démontage de la cartouche 1, est libérée typiquement avant la rupture d'étanchéité au niveau de l'élément d'étanchéité J ou J' qui isole l'espace interne 9 et le conduit 7 pour liquide propre du reste de la chambre de filtration. Ainsi, avec un bouchon 12 qui réalise une étanchéité à un niveau significativement plus bas/plus près du fond que l'étanchéité réalisé au niveau du passage central du flasque 1, il est permis de purger sans forcément contaminer la sortie de filtre avec du liquide brut non purifié.

L'ossature intérieure 1c est ici constituée d'une armature rigide, par exemple en plastique, qui est ajourée. Des ouvertures radiales 60 sont ainsi réparties sur la hauteur de cette ossature 1c. L'ossature 1c peut être allongée suivant la direction de l'axe Z et directement fixée aux flasques, respectivement inférieur et supérieur, en supportant le média 2 du côté de sa face interne. Comme il va être décrit plus loin, l'ossature peut présenter un guide GL apte à guider en translation un coulisseau ou élément 6 jouant un rôle dans l'obtention d'une position angulaire correcte de la cartouche qui correspond à une position du bouchon 12 en regard de l'ouverture 5a du canal 5.

En référence à présent à la figure 4, l'ossature 1c est fixe dans l'espace interne creux 9 et peut présenter un guide longitudinal distribué en au moins deux parties ou rails GL1, GL2 qui font saillie radialement vers l'intérieur dans l'espace 9, en étant parallèles à l'axe Z. L'élément 6, qui a typiquement une forme tubulaire ouverte dans ses deux extrémités, s'étend longitudinalement dans l'espace interne creux 9 en pouvant se déplacer linéairement le long des rails GL1, GL2. Dans l'exemple de la figure 4, les rails GL1, GL2 forment deux reliefs longitudinaux continus, qui sont radialement saillants vers l'intérieur par rapport au reste de l'ossature intérieure 1c afin de s'engager dans des rainures R6 correspondantes/complémentaires prévues sur la face extérieure latérale d'une partie rigide de l'élément 6. De cette façon, l'élément 6 est monté à la manière d'un coulisseau dans l'ossature intérieure 1c.

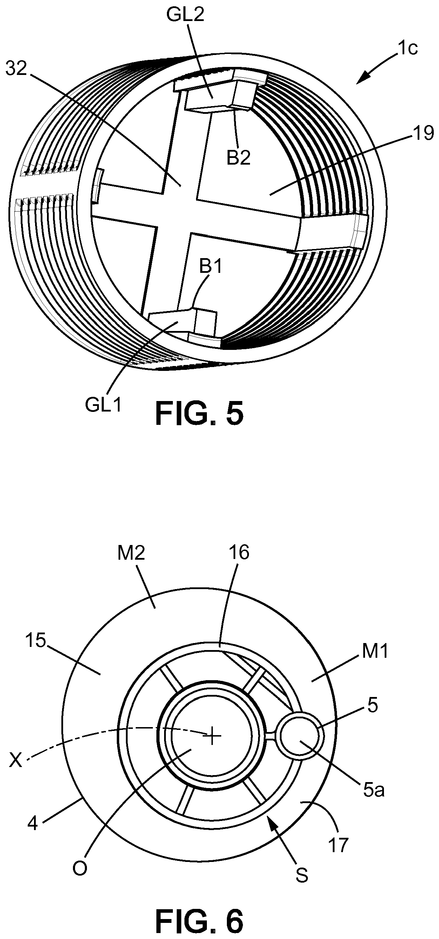

L'élément coulissant 6 est maintenu dans l'espace interne 9 pour avoir un déplacement relatif limité aussi bien en direction du flasque inférieur 1a que dans la direction opposée. En direction du flasque inférieur 1a, une fin de course en coulissement est obtenue par une ou plusieurs surfaces d'arrêt B1, B2, visibles sur la figure 5, qui sont radialement saillantes sur les rails GL1, GL2. La ou les surfaces d'arrêt B1, B2 permettent de retenir axialement l'élément 6, en l'empêchant ainsi de quitter l'espace interne creux 9 au travers de l'orifice axial 30 ou en l'empêchant de venir buter dans la zone axiale de débouché de l'espace 9 correspondant à cet orifice 30. La position relative (par rapport à l'ossature 1c) de l'élément 6 dans la direction opposée dépend d'un moyen de précontrainte, ici d'un organe de rappel élastique 35 tel qu'un ressort.

En référence aux figures 4 et 5, l'organe de rappel élastique 35 s'étend longitudinalement, par exemple entre une première extrémité 35a fixe dans la cartouche 1, et une deuxième extrémité 35b mobile avec l'élément 6 qui forme un coulisseau pousseur de l'organe de rappel élastique 35. L'organe 35 est typiquement compressible pour présenter la première extrémité fixe 35a, qui peut être retenu par une entretoise 32, ici rigide, appartenant à l'ossature intérieure 1c. Comme l'élément 6, l'organe de rappel élastique est disposé dans l'espace interne creux 9.

L'élément 6 peut être introduit axialement, lors de la fabrication/assemblage des différents composant de la cartouche, dans le volume intérieur 19 de l'ossature 1c. Dans une option où l'ossature 1c est déjà entourée par le média 1, l'élément 6 est alors introduit dans l'espace 9 par une ouverture du média 2, par exemple avant la fixation du flasque 1a. En pratique, il peut être plus simple de monter l'élément 6 dans le volume intérieur 19 avant d'attacher le média 2 autour de l'ossature 1c. Les surfaces d'arrêt B1, B2 peuvent présenter un profil de rampe ou une décroissance d'épaisseur sur leur extrémité axiale orientée vers le flasque inférieur 1a, afin de faciliter le montage de l'élément 6 dans le volume intérieur 19 de l'ossature 1c qui présente une forme générale de cage tubulaire, ici cylindrique.

L'élément 6 peut être essentiellement rigide ou présenter une partie rigide formant la face extérieure latérale 6b qui peut coulisser dans les reliefs ou rails GL1, GL2 ou guide GL analogue. L'extrémité de contact 6c est typiquement formée dans une telle partie rigide. Préférentiellement, l'élément 6 a une face extérieure latérale 6b qui présente au moins deux reliefs de guidage R6, par exemple répartis sur deux régions diamétralement opposées. Ces deux reliefs de guidage R6 sont engagés avec deux reliefs ou rails GL1 GL2 allongés longitudinalement qui appartiennent au guide longitudinal,

En référence aux figures 4 et 5, deux surfaces ou nervures radialement saillantes vers l'intérieur par rapport au reste de l'ossature 1c forment des rails GL1, GL2 qui s'insèrent dans des gorges constituant les reliefs R6. Ici, les reliefs pour l'effet anti-rotation consistent donc en des gorges longitudinales creusées dans l'épaisseur de la pièce tubulaire composant l'élément 6 de type coulisseau. Les rails GL1, GL2 de l'ossature 1c fixe maintiennent ainsi l'élément 6 mobile uniquement par coulissement suivant l'axe central Z.

Par ailleurs, les surfaces d'arrêt B1, B2 peuvent être prévus sur les rails comme des bossages, ergots ou projections internes (radiales) saillantes chacune radialement vers l'intérieur par rapport à/depuis une face interne des rails GL1, GL2. Les rainures R6 peuvent déboucher axialement du côté de l'extrémité de contact 6c sans pour autant créer des entailles radialement traversantes dans cette extrémité 6c. Les rainures R6 être disposées dans des secteurs angulaires respectifs qui sont éloignés de la première portion de bord 8a proximale du flasque inférieur 1a, et éventuellement éloignées également de la deuxième portion de bord 8b distale du flasque inférieur 1a.

Plus généralement, chacune des surfaces d'arrêt B1, B2 peut être agencée dans n'importe quelle position permettant un engagement axial d'arrêt par un rebord/bord de prise correspondant formé par l'élément 6. Dans la position par défaut de l'élément 6, il peut être prévu que les surfaces d'arrêt B1, B2 se situent plus éloignées de la portion radiale du flasque 10 que ne l'est la première portion de bord 8a.

L'élément 6, formant coulisseau peut présenter une paroi transversale ajourée ou un organe (entretoise) transversal 33 contre laquelle s'appuie axialement la deuxième extrémité 35b de l'organe élastique de rappel 35 ou moye de précontrainte analogue lorsque ce dernier est conçu de façon distincte (pièce initialement séparée) de l'élément 6. Dans une variante, l'élément 6 et l'organe 35 peuvent faire partie d'un même bloc inséparable.

Dans l'exemple de la figure 4, l'élément 6 consiste en une pièce tubulaire biseautée du côté opposé à l'organe de rappel 35. L'organe transversal 33 peut être intégré dans le creux de la pièce, par exemple en se raccordant sur la face interne de la pièce tubulaire avec un décalage par rapport à un bord annulaire arrière. L'organe transversal 33 permet de pousser la deuxième extrémité 35b mobile en direction de la première extrémité 35a lorsque l'élément 6 est lui-même s'électivement soumis à une contre-poussée par un tube saillant T en guise de réaction à la poussée de la cartouche 1 lors de sa mise en place dans le bol 4 par emboîtement. Comme décrit plus loin, la cartouche 1 se monte sur le conduit 7 longitudinal, formant un port d'accès avec une géométrie de tube saillant T (saillant à l'opposé du fond du bol 4) qui se place dans l'espace interne creux 9 pendant la mise en place de la cartouche 1 dans le boîtier de filtre.

Le bol 4 qui forme un fond du boîtier 3 (voir la figure 2 par exemple) présente un support S de montage, par exemple au moins en partie métallique, pour coopérer avec/fixer le flasque 1a, coopérer en outre avec l'élément 6, et ainsi positionner coaxialement la cartouche filtrante 1 sur le conduit 7 du support S formant le port pour liquide circulant aussi dans l'espace 9, le tube saillant T étant disposé à une extrémité d'un tel conduit 7.

En référence à la figure 1, la cartouche 1 a une configuration qui protège la partie mobile incluant l'élément 6, à l'intérieur de l'espace interne creux 9, tout en offrant une aide pour guider le mouvement de la cartouche 1 par rapport à son support S de montage prévu dans le bol 4. En particulier, l'élément 6 présente une extrémité de contact 6c axialement en regard de l'orifice axial 30 et adaptée pour le contact avec le tube saillant T prévu dans le port d'accès. L'extrémité de contact 6c s'étend de façon asymétrique autour de l'axe central Z pour présenter une inclinaison. Cette disposition permet à l'élément 6, monté mobile dans l'espace interne 9, de réaliser une indexation en rotation de la cartouche, évitant un mauvais positionnement du bouchon décentré 12.

Dans les exemples illustrés, l'élément 6 est engagé sur le guide longitudinal (GL, GL1, GL2) avec un effet anti-rotation, ce qui lui permet de réaliser l'indexation angulaire 6 par un blocage en rotation de la cartouche lorsqu'une configuration de prise est obtenue entre l'extrémité de contact 6c, plus particulièrement au niveau de sa surface d'extrémité axiale S6, et un bord B4 correspondant prévu dans le support fixe de montage, appartenant au bol 4.

La conception tubulaire de l'élément 6, guidé dans l'espace 9, lui permet de coopérer avec le tube saillant T pour l'écoulement de liquide, avec un effet de repositionnement angulaire de la cartouche 1. L'utilisation d'une extrémité 6c à interface inclinée guidée et pouvant s'engager en bout à bout avec le tube saillant T permet un effet de glissement et peut ainsi limiter ou éviter le risque de blocage dans un position différente de la position finale souhaitée. L'élément 6, bloqué en rotation par l'ossature intérieure 1c, permet une indexation en rotation effective puis recule lors du montage de la cartouche 1 dans le boîtier 3, en surmontant la sollicitation/contrainte de l'organe de rappel 35, ce qui participe à un guidage approprié du bouchon 12 décentré.

L'extrémité de contact 6c, comme visible par exemple sur la figure 1, correspond à un bord annulaire et présente typiquement une première portion de bord 8a qui s'étend comparativement plus près du flasque 1a qu'une deuxième portion de bord 8b (distale de la portion radiale 10 du flasque inférieur 1a). Une conception biseautée peut être prévue. On comprend, plus généralement, que l'extrémité de contact 6c peut inclure deux régions en pente adjacentes à la première portion de bord 8a et réparties de part et d'autre de cette première portion de bord 8a. On forme ainsi une portion d'attaque/frontale qui peut être engagée avant la deuxième portion de bord 8b et dont la courbure facilite un effet rotatif guidant la remontée d'un bord B4, également biseauté ou à inclinaison complémentaire, du tube saillant T.

Sur les figures 2 et 3, on a une cartouche 1 qui peut être similaire à celle de la figure 1, ici avec une orientation différente de la partie biseautée de l'élément de guidage 3, modifiée à 180° par rapport à celle de la figure 1, de sorte que le bouchon 12 se situe du même côté que le sommet du tube saillant T prévu dans la base/support S du bol 4.

## Exemple de mise en place du bouchon

En référence aux figures 3 et 6, le bol 4 peut définir intérieurement deux zones ou secteurs angulaires 15, 17, avec un premier secteur angulaire 15 opposé à l'ouverture 5a du canal d'évacuation 5 et située le long de la périphérie interne du bol 4. Une structure du support S peut être prévu, qui permet de former les conduits respectif 5, 7. A l'opposé du secteur 15, le secteur angulaire 17 comprend la région où se situe le canal 5 d'évacuation. Une paroi intermédiaire 16, ici annulaire, est optionnellement prévue dans la structure S. Le bol 4 est ici décomposé avec une moitié de bol M1 proche du canal d'évacuation 5, incluant le secteur angulaire 17. La première zone 15 s'étend dans l'autre moitié de bol M2. Dans cet exemple, le bol 4 présente une section transversale circulaire ou annulaire et s'étend autour d'un axe longitudinal qui peut être éventuellement décalé par rapport à l'axe central X du conduit 7. Alternativement, l'axe X est un axe de symétrie de révolution pour la paroi 4a.

Cette structure S permet de définir une unique position angulaire de la cartouche 1 dans laquelle le bouchon 12 peut s'engager dans le canal 5. Lors de la mise en place de la cartouche 1, l'opérateur peut typiquement faire pivoter la cartouche 1, par exemple selon la direction indiquée par la flèche A sur la figure 3 afin que le bouchon 12 se trouve dans le secteur angulaire 17. Le tube saillant T est alors déjà inséré dans l'orifice axiale 30, ici au travers du flasque inférieur 1a, de façon compatible avec une rotation.

Puis pendant la phase d'approche pour amener le flasque inférieur 1a sur un épaulement 7a formant butée axiale du support S, l'extrémité de contact 6c vient glisser (en étant guidée) le long du bord B4 incliné du tube saillant T, ce qui limite le débattement par rapport à l'axe central Z de la cartouche 1, et surtout accompagne/guide la rotation fine autour de l'axe X jusqu'à obtenir la configuration de prise du genre montré sur les figures 2 et 3. L'organe de rappel 35 exerce ici une précontrainte suffisamment élevée pour limiter ou empêcher le recul de l'élément 6 dans l'espace interne 9, de sorte que le bouchon 12 va est dans la bonne position angulaire sans pour autant être tout de suite engagée dans le canal 5. La figure 3 illustre cette configuration sans recul de l'élément 6 qui permet l'indexation angulaire. L'organe 35 n'est pas (significativement) comprimé. Il s'agit d'un premier état d'enfoncement de la cartouche 1 dans le bol 4.

En référence aux figures 2 et 6, on peut voir qu'après un positionnement correct du bouchon 12 dans la première zone 15 et en alignement avec le canal 5, l'opérateur peut continuer l'enfoncement, éventuellement en utilisant le couvercle 3a déjà emboîté sur la cartouche 1. Ainsi, la cartouche 1 passe de son premier état d'enfoncement dans laquelle celle-ci ne peut déjà plus être déplacée en rotation autour de son axe Z à un deuxième état d'enfoncement (visible sur la figure 2), ici par l'effet du vissage du couvercle. La cartouche 1 suit alors un mouvement purement axial. Seule la partie rigide de l'élément 6 d'indexation angulaire ne bouge plus car il est en prise axialement contre le bord B4 du tube saillant T. Pour le deuxième état d'enfoncement, le flasque inférieur 1a peut optionnellement axialement buter sur l'épaulement externe 7a prévu sur la face externe du conduit 7.

La hauteur H2 du bouchon 12, définie depuis le flasque 1a, peut être légèrement inférieure ou égale à la hauteur H1 qui est la hauteur de pente formée dans l'extrémité de contact 6c. Ainsi, on peut disposer d'une raideur de ressort pour d'une précontrainte assez importante pour le recul de l'élément 6, tout en s'assurant que le bouchon 12 ne va pas buter directement sur le support S dans le bol 4 en raison d'un décalage angulaire par rapport au canal 5. Dans certaines options, la relation suivante peut être satisfaite :

$$0{,}88 \leq H2/H1 \leq 1{,}01$$

Dans l'exemple de la figure 1, le bouchon 12 fait saillie sur le deuxième côté (où se situe la deuxième portion de bord 8b) par rapport au flasque 1a. Cette disposition peut prévenir le risque que le bouchon 12a bute dans le fond du bol 4 par une inclinaison trop importante de la cartouche 1 (réduction de l'inclinaison à l'approche du fond du bol).

Tant que le tube saillant T n'a pas glissé et remonté complètement sur les portions de bord en pente de l'extrémité de contact 6c pour atteindre ou se positionner au plus près de la portion de bord 8b, il reste une mobilité en rotation de la cartouche en réponse à une action de poussée vers le fond du bol 4 et le bouchon 12 n'est pas en contact sur une quelconque paroi de fond située au niveau de l'ouverture 5a du canal 5 d'évacuation/purge. Le bord B4 du tube saillant T, peut facilement remonter par glissement et rotation sur l'extrémité de contact 6c, le long des portions de bord en pente pour occuper la configuration de prise ne permettant plus de mouvement relatif entre l'extrémité de contact 6c et ce bord B4 correspondant. Seule une action de retrait de la cartouche 1 avec extraction du bouchon 12 hors du canal 5 pourra permettre à nouveau un tel mouvement relatif.

Le filtre F, à l'état assemblé comme visible sur la figure 2, peut présenter une entrée et une sortie situées sur le bol 4, ce qui permet de simplifier la conception d couvercle 3a amovible. La cartouche 1 est logée ainsi de façon amovible dans le volume intérieur du boîtier 3 avec le tube saillant T inséré dans l'espace 9 en bloquant la rotation de la cartouche autour de l'axe X (coïncidant avec l'axe Z qui travers le tube saillant T) tant qu'il y a une configuration de prise. Lors du démontage, on comprend que l'organe de rappel 35 va éviter une rotation précoce, permettant d'abord un retrait linéaire du bouchon 12 sans sollicitation en rotation jusqu'à ce que le bord B4 puisse se désengager de l'extrémité de contact 6c de l'élément 6 d'indexation en rotation/indexation angulaire.

Le tube saillant T et l'extrémité de contact 6c sont en chevauchement dans la configuration de prise qui empêche la rotation de la cartouche 1. Il peut y avoir une complémentarité de forme, complète ou partielle. La complémentarité d'inclinaison peut suffire ici, le cas échéant en ayant des bords annulaires biseautés complémentaires pour réaliser le chevauchement sans que le bord B4 ne vienne entourer l'élément 6.

,Un des avantages de la cartouche 1 est qu'elle présente une facilité de manipulation et intègre un élément pouvant combiner des avantages de détrompeur (adaptation à la structure S prévue dans le bol 4, en en particulier adaptation sur le tube saillant T) et d'indexation en rotation pour éviter des ratés de positionnement ou une dégradation du bouchon 12 lors de la mise en place.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple, bien que les dessins illustrent le cas d'un ressort hélicoïdal, typiquement ayant une hauteur supérieure ou égale à un tiers ou un quart de la hauteur du média filtrant 2 annulaire, d'autre(s) organe(s) déformables pour permettre un éloignement axial de l'extrémité de contact 6c par rapport au flasque 1a peuvent être prévus. Également la hauteur H6 (suivant l'axe Z) de l'élément 6 a été illustrée pour supérieure à la longueur H2 et pour être éventuellement le double environ de la hauteur H1 de l'extrémité 6c formant l'interface inclinée de contact. Cette hauteur H6 peut bien entendu être bien plus petite ou, inversement plus importante tout en restant compatible avec un positionnement interne de l'extrémité 6c, dans l'espace 9.

**Revendications**

1. Cartouche filtrante (1) pour la filtration d'un liquide de moteur à combustion, dans un filtre (F) disposant d'un canal d'évacuation (5) décentré sur un côté par rapport à un port d'accès appartenant, dans une base du filtre, à une entrée pour liquide brut ou à une sortie pour liquide purifié, la cartouche comprenant un média filtrant (2) de forme annulaire permettant la purification dudit liquide en s'étendant autour d'un axe central (Z), un espace interne creux (9) délimité par le média filtrant (2) débouchant axialement via un orifice axial (30) de la cartouche, **caractérisée en ce qu'**elle comprend :

   - un flasque (1a) comportant l'orifice axial (30) et une portion radiale (10) de forme annulaire autour de cet orifice (30) ;
   - une ossature (1c) intérieure, fixe dans l'espace interne creux (9) et pourvue d'un guide longitudinal (GL ; GL1, GL2) ;
   - un élément (6), de préférence de forme tubulaire, qui s'étend longitudinalement dans l'espace interne creux (9), l'élément (6) présentant une extrémité de contact (6c) axialement en regard de l'orifice axial (30) et adaptée pour le contact avec un tube saillant (T) prévu dans le port d'accès, l'extrémité de contact (6c) s'étendant de façon asymétrique autour de l'axe central (Z) pour présenter une inclinaison avec une première portion de bord (8a) qui s'étend comparativement plus près du flasque (1a) qu'une deuxième portion de bord (8b) ;

- au moins une surface d'arrêt (B1, B2) pour retenir axialement l'élément (6), en l'empêchant de quitter l'espace interne creux (9) au travers de l'orifice axial (30) ;

- un moyen de précontrainte ; et

- un bouchon (12), de préférence parallèle à l'axe central (Z), faisant saillie à l'opposé du média (2), depuis le flasque (1a), pour permettre d'obturer de manière étanche une ouverture (5a) du canal d'évacuation (5) ;

et dans laquelle l'élément, engagé sur le guide longitudinal (GL ; GL1, GL2) avec un effet antirotation, est un élément d'indexation angulaire (6) agencé mobile dans l'espace interne creux (9) pour se déplacer, linéairement le long du guide (GL ; GL1, GL2) suivant la direction de l'axe central (Z), en passant :

- d'une première position compatible avec un engagement direct entre l'extrémité de contact (6c) et le tube saillant (T), réalisé dans l'espace interne creux (9), avec l'élément d'indexation angulaire (6) en butée contre ou axialement proximal par rapport à l'au moins une surface d'arrêt (B1, B2) prévue sur le guide,

- à une deuxième position comparativement plus éloignée du flasque (1a) qui conserve ledit engagement direct, dans laquelle l'élément d'indexation angulaire (6) est désengagé ou axialement distal de l'au moins une surface d'arrêt (B1, B2),

l'élément d'indexation angulaire (6) étant apte à s'éloigner du flasque (1a) en surmontant une force de rappel du moyen de précontrainte sollicitant ledit élément (6).

**2.** Cartouche filtrante selon la revendication 1, dans laquelle l'élément d'indexation angulaire (6) inclut une partie rigide pourvue d'une face extérieure latérale (6b) avec deux reliefs de guidage (R6) formés sur la face extérieure latérale et engagés avec deux reliefs (GL1, GL2) allongés longitudinalement qui appartiennent au guide longitudinal, l'extrémité de contact (6c) étant formée dans la partie rigide.

**3.** Cartouche filtrante selon la revendication 2, dans laquelle une portion (6a) de la face extérieure latérale (6b) se situe plus près du flasque (1a) que la deuxième portion de bord (8b).

**4.** Cartouche filtrante selon la revendication 2 ou 3, dans laquelle le moyen de précontrainte est un organe de rappel élastique (35), de préférence sous la forme d'un organe axialement compressible, et dans laquelle la partie rigide de l'élément d'indexation angulaire (6) est solidaire en translation, suivant l'axe central (Z), d'une extrémité (35b) mobile de l'organe de rappel élastique (35).

**5.** Cartouche filtrante selon l'une quelconque des revendications 1 à 3, comprenant, dans l'espace interne creux (9), un élément compressible élastiquement déformable (35) apte à solliciter par défaut, de préférence par une poussée longitudinale, l'élément d'indexation angulaire (6) contre l'au moins une surface d'arrêt (B1, B2).

**6.** Cartouche filtrante selon l'une quelconque des revendications 1 à 3, dans laquelle l'extrémité de contact (6c) forme l'extrémité d'une pièce tubulaire axiale avec une inclinaison progressive au moins dans deux régions en pente adjacentes à la première portion de bord (8a) et réparties de part et d'autre de la première portion de bord (8a).

**7.** Cartouche filtrante selon l'une quelconque des revendications précédentes, dans laquelle le moyen de précontrainte, qui présente une première extrémité (35a) fixe dans la cartouche (1), s'étend longitudinalement dans l'espace interne creux (9) entre une entretoise (32) de l'ossature intérieure (1c), contre laquelle s'appuie la première extrémité (35a), et un organe transversal (33) porté par l'élément d'indexation angulaire (6) qui :

- s'étend transversalement dans la pièce tubulaire axiale ; et
- est engagé par une deuxième extrémité (35b) mobile du moyen de précontrainte, de sorte que l'organe transversal (33) est apte à pousser la deuxième extrémité (35b) mobile en direction de la première extrémité (35a).

**8.** Cartouche filtrante selon l'une quelconque des revendications précédentes, dans laquelle l'extrémité de contact (6c) est une extrémité de tube biseautée, de préférence avec un angle d'inclinaison compris entre 20 et 70°.

**9.** Cartouche filtrante selon l'une quelconque des revendications précédentes, dans laquelle l'extrémité de contact (6c) se décompose en deux moitiés symétriques l'une de l'autre par rapport un plan passant par l'axe central (Z) qui est un plan de symétrie du média filtrant (2), la première portion de bord (8a) et la deuxième portion de bord (8b) étant distribués chacune dans les deux moitiés, la deuxième portion de bord (8b) étant une portion de l'extrémité de contact (6c) distale par rapport au flasque (1a).

10. Cartouche filtrante selon l'une quelconque des revendications précédentes, dans laquelle l'espace interne creux (9) délimité par le média filtrant (2) est un espace de circulation pour liquide filtré par le média filtrant (2), l'orifice axial (30) étant un orifice de sortie (30) de la cartouche (1),
et dans laquelle une partie annulaire d'étanchéité (J ; J') élastiquement déformable est prévue sur une partie d'insertion annulaire du flasque (1a), afin de délimiter un minimum local pour la section de passage au travers du flasque (1a) et permettre de réaliser un contact annulaire radial d'étanchéité annulaire contre une portion annulaire du tube saillant (T) inséré dans l'espace interne creux (9).

11. Cartouche filtrante selon l'une quelconque des revendications précédentes, dans laquelle l'inclinaison dans l'extrémité de contact (6c) s'étend sur une hauteur H1, dite hauteur de pente, qui vérifie la relation suivante par rapport à une hauteur H2 du bouchon (12) définie depuis le flasque (1a) :

$$0{,}88 \leq H2/H1 \leq 1{,}01$$

12. Filtre (F) pour la purification d'un liquide de moteur à combustion, le filtre comprenant :

- un boîtier (3) de filtre qui présente une entrée pour liquide brut et une sortie (O) pour liquide purifié, le boîtier (3) définissant un volume intérieur et présentant un fond avec un canal d'évacuation (5) distinct de l'entrée et de la sortie (O) ;
- un couvercle (3a) pour empêcher l'accès au volume intérieur et se fixant de manière amovible sur un bol (4) du boîtier (3) entourant le volume intérieur ;
- un tube saillant (T) prévu dans un port d'accès à la sortie (O), le tube saillant (T) étant une partie fixe solidaire du bol (4) ;
- la cartouche filtrante (1) selon l'une quelconque des revendications précédentes, logée de façon amovible dans le volume intérieur du boîtier (3) avec le tube saillant (T) inséré dans l'espace interne creux (9) en engageant l'extrémité de contact (6c) de l'élément d'indexation en rotation (6), suivant un engagement permettant d'indexer la cartouche filtrante (1) en rotation autour de l'axe central (Z) par rapport au boîtier (3),

dans lequel le tube saillant (T) est traversé par l'axe central (Z) et s'oppose à un mouvement de rotation relative, autour de l'axe central (Z), entre la cartouche filtrante (1) et le bol (4), dans une configuration de prise dans laquelle le tube saillant (T) et l'extrémité de contact (6c) sont en chevauchement par complémentarité de forme.

13. Filtre selon la revendication 12, dans lequel la configuration de prise est obtenue avant que le bouchon (12) pénètre dans le canal d'évacuation (5) pour l'obturer.

14. Filtre selon la revendication 12 ou 13, dans lequel le bol (4) forme un fond du boîtier (3) et présente un support (S) de montage, le flasque (1a) coopérant avec ledit support (S) pour positionner coaxialement la cartouche filtrante (1) sur un conduit (7) du support (S) formant le port d'accès, le tube saillant (T) étant disposé à une extrémité du conduit (7), et dans lequel le couvercle (3a) est adapté pour être vissé sur le bol (4) et présente un organe de fixation de la cartouche filtrante (1), ledit organe de fixation comprenant une portion d'insertion dans l'espace interne autorisant une rotation relative du couvercle (3a) par rapport à la cartouche filtrante (1) lors d'un vissage du couvercle (3a) sur lequel est fixé la cartouche filtrante.

**Patentansprüche**

1. Filterpatrone (1) zum Filtern einer Flüssigkeit aus einem Verbrennungsmotor in einem Filter (F), welcher über einen Abflusskanal (5) verfügt, welcher zu einer Seite gegenüber einer Zugangsöffnung versetzt ist, welche in einem Filterboden zu einem Einlass für Rohflüssigkeit oder zu einem Auslass für gereinigte Flüssigkeit gehört, wobei die Patrone ein ringförmiges Filtermedium (2) umfasst, welches die Reinigung der Flüssigkeit ermöglicht, indem es sich um eine Mittelachse (Z) erstreckt, wobei ein von dem Filtermedium (2) begrenzter hohler Innenraum (9) axial über eine axiale Öffnung (30) der Patrone mündet, **dadurch gekennzeichnet, dass** sie umfasst:

- einen Flansch (1a), welcher die axiale Öffnung (30) und einen ringförmigen radialen Abschnitt (10) um diese Öffnung (30) herum umfasst;
- ein inneres Gerüst (1c), welches in dem hohlen Innenraum (9) fixiert ist und mit einer Longitudinalführung (GL; GL1, GL2) bereitgestellt ist;
- ein Element (6), vorzugsweise in einer rohrförmigen Form, welches sich longitudinal in dem hohlen Innenraum (9) erstreckt, wobei das Element (6) ein Kontaktende (6c) aufweist, welches axial gegenüber der axialen Öffnung (30) liegt und dazu eingerichtet ist, mit einem in der Zugangsöffnung vorgesehenen vorstehenden Rohr (T) in Kontakt zu stehen, wobei sich das Kontaktende (6c) asymmetrisch um die Mittelachse (Z) herum erstreckt, um eine Neigung mit einem ersten Randabschnitt (8a) aufzuweisen, welcher sich vergleichsweise näher an dem Flansch (1a) erstreckt als ein zweiter Randabschnitt (8b);

- wenigstens eine Anschlagfläche (B1, B2), um das Element (6) axial zu halten und zu verhindern, dass es den hohlen Innenraum (9) durch die axiale Öffnung (30) verlässt;
- eine Vorspannvorrichtung; und
- einen Stopfen (12), vorzugsweise parallel zu der Mittelachse (Z), welcher gegenüber dem Medium (2) aus dem Flansch (1a) herausragt, um eine Öffnung (5a) des Abflusskanals (5) dicht verschließen zu können;

und wobei das Element, welches mit einer Verdrehsicherung auf der Longitudinalführung (GL; GL1, GL2) in Eingriff steht, ein Winkelindexierungselement (6) ist, welches in dem inneren Hohlraum (9) beweglich angeordnet ist, um sich linear entlang der Führung (GL; GL1, GL2) in Richtung der Mittelachse (Z) zu verlagern, über:

- eine erste Position, welche mit einem direkten Eingriff zwischen dem Kontaktende (6c) und dem vorstehenden Rohr (T) kompatibel ist, welches in dem hohlen Innenraum (9) ausgebildet ist, wobei das Winkelindexierungselement (6) an der wenigstens einen Anschlagfläche (B1, B2) anliegt, welche an der Führung vorgesehen ist, oder axial proximal zu dieser ist,
- eine zweite Position, welche vergleichsweise weiter von dem Flansch (1a) entfernt ist, welcher den direkten Eingriff beibehält, wobei das Winkelindexierungselement (6) aus dem Eingriff gelöst oder axial distal zu der wenigstens einen Anschlagfläche (B1, B2) ist, wobei das Winkelindexierungselement (6) in der Lage ist, sich unter Überwindung einer Rückstellkraft der Vorspannvorrichtung, welche auf das Element (6) wirkt, von dem Flansch (1a) zu entfernen.

2. Filterpatrone nach Anspruch 1, wobei das Winkelindexierungselement (6) einen starren Teil mit einer seitlichen Außenfläche (6b) umfasst, an welcher zwei Führungserhebungen (R6) ausgebildet sind, welche an der seitlichen Außenfläche gebildet sind und mit zwei Erhebungen (GL1, GL2) in Eingriff stehen, welche sich zu der Longitudinalführung gehörend longitudinal erstrecken, wobei das Kontaktende (6c) in dem starren Teil ausgebildet ist.

3. Filterpatrone nach Anspruch 2, wobei ein Abschnitt (6a) der seitlichen Außenfläche (6b) näher an dem Flansch (1a) angeordnet ist als der zweite Randabschnitt (8b).

4. Filterpatrone nach Anspruch 2 oder 3, wobei die Vorspannvorrichtung ein elastisches Rückstellelement (35) ist, vorzugsweise in Form eines axial komprimierbaren Elements, und wobei der starre Teil des Winkelindexierungselements (6) entlang der Mittelachse (Z) verschiebefest mit einem beweglichen Ende (35b) des elastischen Rückstellements (35) verbunden ist.

5. Filterpatrone nach einem der Ansprüche 1 bis 3, umfassend, in dem hohlen Innenraum (9), ein elastisch verformbares, komprimierbares Element (35), welches in der Lage ist, das Winkelindexierungselement (6) vorzugsweise durch einen longitudinalen Druck gegen die wenigstens eine Anschlagfläche (B1, B2) zu drücken.

6. Filterpatrone nach einem der Ansprüche 1 bis 3, wobei das Kontaktende (6c) das Ende eines axialen rohrförmigen Stücks mit einer progressiven Neigung in wenigstens zwei an den ersten Randabschnitt (8a) angrenzenden und auf beiden Seiten des ersten Randabschnitts (8a) verteilten geneigten Bereichen bildet.

7. Filterpatrone nach einem der vorstehenden Ansprüche, wobei sich die Vorspannvorrichtung, welche ein erstes, in der Patrone (1) fixiertes Ende (35a) aufweist, longitudinal in dem hohlen Innenraum (9) zwischen einem Abstandhalter (32) des Innengerüsts (1c), an welchem sich das erste Ende (35a) abstützt, und einem von dem Winkelindexierungselement (6) getragenen Querelement (33) erstreckt, welches:

- sich quer in dem axialen rohrförmigen Stück erstreckt; und
- mit einem beweglichen zweiten Ende (35b) der Vorspannvorrichtung in Eingriff steht, so dass das Querelement (33) das bewegliche zweite Ende (35b) in Richtung des ersten Endes (35a) drücken kann.

8. Filterpatrone nach einem der vorstehenden Ansprüche, wobei das Kontaktende (6c) ein abgeschrägtes Rohrende ist, vorzugsweise mit einem Neigungswinkel zwischen 20 und 70°.

9. Filterpatrone nach einem der vorstehenden Ansprüche, wobei sich das Kontaktende (6c) in zwei symmetrische Hälften aufteilt, welche in Bezug auf eine durch die Mittelachse (Z) verlaufende Ebene, welche eine Symmetrieebene des Filtermediums (2) ist, symmetrisch zueinander sind, wobei der erste Randabschnitt (8a) und der zweite Randabschnitt (8b) jeweils auf die beiden Hälften verteilt sind, wobei der zweite Randabschnitt (8b) ein Abschnitt des Kontaktendes (6c) ist, welcher von dem Flansch (1a) entfernt ist.

10. Filterpatrone nach einem der vorstehenden Ansprüche, wobei der durch das Filtermedium (2) begrenzte hohle Innenraum (9) ein Strömungsraum für durch das Filtermedium (2) gefilterte Flüssigkeit ist, wobei die axiale Öffnung (30) eine Auslassöffnung (30) der Patrone (1) ist, und wobei ein elastisch verformbarer ringförmiger Dichtungsteil (J; J') an einem ringförmigen Einführungsteil der Flanschs (1a) bereitgestellt ist, um ein lokales Minimum für den Durchgangsquerschnitt durch den Flansch (1a) zu begrenzen und zu ermöglichen, dass ein ringförmiger Kontakt eine radiale Dichtung gegen einen ringförmigen Abschnitt des in den hohlen Innenraum (9) eingeführten vorstehenden Rohrs (T) realisiert.

11. Filterpatrone nach einem der vorstehenden Ansprüche, wobei sich die Neigung in dem Kontaktende (6c) über eine Höhe H1, welche als Neigungshöhe bezeichnet wird, erstreckt, welche in Bezug auf eine von dem Flansch (1a) aus definierte Höhe H2 des Stopfens (12) die folgende Beziehung erfüllt:

$$0,88 \leq H2/H1 \leq 1,01$$

12. Filter (F) zur Reinigung einer Flüssigkeit aus einem Verbrennungsmotor, der Filter umfassend:

- ein Filtergehäuse (3), welches einen Einlass für Rohflüssigkeit und einen Auslass (O) für gereinigte Flüssigkeit aufweist, wobei das Gehäuse (3) einen Innenraum definiert und einen Boden mit einem von dem Einlass und von dem Auslass (O) getrennten Abflusskanal (5) aufweist;
- einen Deckel (3a), welcher den Zugang zu dem Innenraum verhindert und abnehmbar an einer Schale (4) des Gehäuses (3) befestigt ist, welche den Innenraum umgibt;
- ein vorstehendes Rohr (T), welches in einer Zugangsöffnung zu dem Auslass (O) vorgesehen ist, wobei das vorstehende Rohr (T) ein fester, mit der Schale (4) verbundener Teil ist;
- die Filterpatrone (1) nach einem der vorstehenden Ansprüche, welche abnehmbar in dem Innenraum des Gehäuses (3) untergebracht ist, wobei das vorstehende Rohr (T) in den hohlen Innenraum (9) eingeführt ist und mit dem Kontaktende (6c) des Winkelindexierungselements (6) in Eingriff steht, auf einen Eingriff folgend, welcher ein Indexieren der Filterpatrone (1) beim Rotieren um die Mittelachse (Z) relativ zu dem Gehäuse (3) ermöglicht, wobei das vorstehende Rohr (T) von der Mittelachse (Z) durchquert wird und einer relativen Rotationsbewegung um die Mittelachse (Z) zwischen der Filterpatrone (1) und der Schale (4) in einer Eingriffskonfiguration entgegenwirkt, in welcher das vorstehende Rohr (T) und das Kontaktende (6c) sich durch komplementäre Form überlappen.

13. Filter nach Anspruch 12, wobei die Eingriffskonfiguration erreicht wird, bevor der Stopfen (12) in den Abflusskanal (5) eindringt, um diesen zu verschließen.

14. Filter nach Anspruch 12 oder 13, wobei die Schale (4) einen Boden des Gehäuses (3) bildet und eine Montagehalterung (S) aufweist, wobei der Flansch (1a) mit der Halterung (S) zusammenwirkt, um die Filterpatrone (1) koaxial auf einer Leitung (7) der Halterung (S) zu positionieren, welche den Zugangsanschluss bildet, wobei das vorstehende Rohr (T) an einem Ende der Leitung (7) angeordnet ist und wobei der Deckel (3a) so ausgelegt ist, dass er auf die Schale (4) geschraubt werden kann, und ein Befestigungselement für die Filterpatrone (1) aufweist, wobei das Befestigungselement einen in den Innenraum einführbaren Abschnitt umfasst, welcher eine relative Drehung des Deckels (3a) gegenüber der Filterpatrone (1) beim Aufschrauben des Deckels (3a), an welchem die Filterpatrone befestigt ist, ermöglicht.

**Claims**

1. Filter cartridge (1) for filtering a combustion-engine liquid, in a filter (F) having a discharge channel (5) offset on one side with respect to an access port belonging, in a base of the filter, to an inlet for raw liquid or to an outlet for purified liquid, the cartridge comprising an annular-shaped filtering medium (2) allowing the purification of said liquid while extending around a central axis (Z), a hollow internal space (9) delimited by the filtering medium (2) axially opening through an axial orifice (30) of the cartridge, **characterised in that** it comprises:

- a flange (1a) having the axial orifice (30) and a radial annular-shaped portion (10) around this orifice (30);
- an inner framework (1c), secured in the hollow internal space (9) and provided with a longitudinal guide (GL; GL1, GL2);
- an element (6), preferably tubular in shape, which extends longitudinally within the hollow internal space (9), the element (6) having a contact end (6c) axially aligned facing the axial orifice (30) and adapted for contact with a protruding tube (T) provided in the access port, the contact end (6c) extending asymmetrically around the central axis (Z) to create an inclination with a first edge portion (8a) that extends comparatively closer to the flange (1a) than a second edge portion (8b);

- at least one stop surface (B1, B2) for axially retaining the element (6), preventing it from leaving the hollow internal space (9) through the axial orifice (30);
- a prestressing means; and
- a plug (12), preferably parallel to the central axis (Z), protruding opposite to the medium (2), from the flange (1a), to close off in a watertight manner an opening (5a) of the discharge channel (5);

and in which the element, engaged on the longitudinal guide (GL; GL1, GL2) with an anti-rotation effect, is an angular-location element (6) arranged movably within the hollow internal space (9), to move linearly along the guide (GL; GL1, GL2) in the direction of the central axis (Z), passing:

- from a first position compatible with direct engagement between the contact end (6c) and the protruding tube (T), implemented within the hollow internal space (9), with the angular-location element (6) abutting against or being axially proximal with respect to at least one stop surface (B1, B2) provided on the guide,
- to a second position that is comparatively further from the flange (1a) that maintains said direct engagement, in which the angular-location element (6) is disengaged from or axially distal to the at least one stop surface (B1, B2),

the angular-location element (6) being capable of moving away from the flange (1a) while overcoming a return force exerted by the prestressing means acting on said element (6).

2. Filter cartridge according to claim 1, in which the angular-location element (6) includes a rigid part provided with a lateral outer face (6b) with two guide reliefs (R6) formed on the lateral outer space and engaging with two longitudinally elongated reliefs (GL1, GL2) belonging to the longitudinal guide, the contact end (6c) being formed in the rigid part.

3. Filter cartridge according to claim 2, wherein a portion (6a) of the lateral outer face (6b) is located closer to the flange (1a) than the second edge portion (8b).

4. Filter cartridge according to claim 2 or 3, wherein the prestressing means is an elastic return member (35), preferably in the form of an axially compressible member, and wherein the rigid part of the angular-location element (6) is constrained to translate, along the central axis (Z), with a movable end (35b) of the elastic return member (35).

5. Filter cartridge according to any one of claims 1 to 3, comprising, in the hollow internal space (9), an elastically deformable compressible element (35) that is capable of stressing by default, preferably through a longitudinal thrust, the angular-locating element (6) against the at least one stop surface (B1, B2).

6. Filter cartridge according to any one of claims 1 to 3, wherein the contact end (6c) forms the end of an axial tubular component with a gradual inclination in at least two sloping regions adjacent to the first edge portion (8a) and distributed on either side of the first edge portion (8a).

7. Filter cartridge according to any one of the preceding claims, wherein the prestressing means, which has a first end (35a) secured in the cartridge (1), extends longitudinally in the hollow internal space (9) between a strut (32) of the inner framework (1c), against which the first end (35a) bears, and a transverse member (33) carried by the angular-location element (6) which:

- extends transversely within the axial tubular section; and
- is engaged by a second movable end (35b) of the prestressing means, such that the transverse member (33) is able to push the second movable end (35b) toward the first end (35a).

8. Filter cartridge according to any one of the preceding claims, wherein the contact end (6c) is a bevelled tube end, preferably with an inclination angle between 20 and 70°.

9. Filter cartridge according to any one of the preceding claims, wherein the contact end (6c) is divided into two halves that are symmetrical to one another with respect to a plane passing through the central axis (Z), which is a plane of symmetry of the filtering medium (2), the first edge portion (8a) and the second edge portion (8b) each being distributed in the two halves, the second edge portion (8b) being a portion of the contact end (6c) that is distal with respect to the flange (1a).

10. Filter cartridge according to any one of the preceding claims, wherein the hollow internal space (9) delimited by the filtering media (2) is a circulation space for liquid filtered by the filtering media (2), the axial orifice (30) being an outlet orifice (30) of the cartridge (1),

and wherein an elastically deformable annular sealing part (J; J') is provided on an annular insertion part of the flange (1a), in order to define a local minimum for the cross-sectional passage through the flange (1a) and to produce an annular radial sealing contact against an annular portion of the protruding tube (T) inserted into the hollow internal space (9).

11. Filter cartridge according to any one of the preceding claims, wherein the inclination in the contact end (6c) extends over a height H1, referred to as the slope height, which satisfies the following relationship in relation to a height H2 of the plug (12) defined from the flange (1a):

$$0.88 \leq H2/H1 \leq 1.01$$

12. Filter (F) for purifying a combustion-engine fluid, the filter comprising:

- a filter housing (3) which has an inlet for raw fluid and an outlet (O) for purified fluid, the housing (3) defining an inner volume and having a bottom with a discharge channel (5) separate from the inlet and from the outlet (O);
- a cover (3a) for preventing access to the inner volume and removably attached to a bowl (4) of the housing (3) surrounding the inner volume;
- a protruding tube (T) provided in an access port to the outlet (O), the protruding tube (T) being a fixed part secured to the bowl (4);
- the filter cartridge (1) according to any one of the preceding claims, removably housed within the inner volume of the housing (3), with the protruding tube (T) inserted into the hollow internal space (9) by engaging the contact end (6c) of the rotational-locating element (6), in an engagement enabling the filter cartridge (1) to be rotationally located about the central axis (Z) relative to the housing (3),

wherein the protruding tube (T) is traversed by the central axis (Z) and opposes relative rotational movement about the central axis (Z) between the filter cartridge (1) and the bowl (4), in a gripping configuration in which the protruding tube (T) and the contact end (6c) overlap by complementarity of shape.

13. Filter according to claim 12, wherein the gripping configuration is obtained before the plug (12) enters the discharge channel (5) to close it.

14. Filter according to claim 12 or 13, wherein the bowl (4) forms a base of the housing (3) and includes a mounting support (S), the flange (1a) cooperating with said support (S) to position the filter cartridge (1) coaxially on a conduit (7) of the support (S) forming the access port, the protruding tube (T) being located at one end of the conduit (7), and wherein the cover (3a) is adapted to be screwed onto the bowl (4) and has a member for fastening the filter cartridge (1), said fastening member comprising a portion for insertion in the internal space allowing a relative rotation of the cover (3a) with respect to the filter cartridge (1) during the screwing of the cover (3a) on which the filter cartridge is attached.

# FIG. 1

FIG. 2

3a

1d

1b

1c

2

GL1

GL2

6

6b

6d

2a

T

12

7a

5

4

7

A

## FIG. 3

**FIG. 4**

**FIG. 5**

**FIG. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1229985 A

- EP 2490786 A